# EUROPEAN PATENT APPLICATION

(11) **EP 4 012 241 A1**
(43) Date of publication of application: **15.06.2022**
(21) Application number: 20852407.4
(22) Date of filing: 07.08.2020
(51) Int. Cl.: F16L 41/08

(54) **PIPE BRANCH STRUCTURE**

(30) Priority: 09.08.2019 JP 2019147972
(71) Applicant: Sanoh Industrial Co., Ltd., Tokyo 150-0013 (JP)
(72) Inventor: OKADA, Hiroyuki, Koga-shi, Ibaraki 306-0041 (JP)
(74) Representative: dompatent von Kreisler Selting Werner - Partnerschaft von Patent- und Rechtsanwälten mbB
(86) International application number: PCT/JP2020/030473
(87) International publication number: WO 2021/029390

(57) **Abstract**

A pipe branch structure includes a main pipe, and plural branch couplings disposed one-to-one at plural branch positions set between both axial direction ends of the main pipe. A cross hole is formed at each of the branch positions of the main pipe. Each branch coupling includes a tubular section attached to an outer periphery of the main pipe, a branch section formed with a passage in communication with an inside of the tubular section and configured to connect to a branch pipe, and a seal member configured to seal between the main pipe and the tubular section. The tubular section is attached to the outer periphery of the main pipe in a state in which the cross hole and the passage in the branch section are in communication with each other.

## Description

### Technical Field

The present disclosure relates to a pipe branch structure.

### Background Art

A branch structure employing T-shaped couplings is known as a branch structure in which pipes branch off from a main pipe at plural positions.

In a pipe branch structure disclosed in Japanese Utility Model Application Publication (JP-Y) No. H05-11435, a branch pipe is branched off from a single main pipe by attaching a tubular section of a T-shaped branch coupling to an outer periphery of the main pipe, passing the branch pipe through a branch section of the branch coupling, and press-fitting a leading end of the branch pipe into a cross hole formed at the main pipe.

### SUMMARY OF INVENTION

### Technical Problem

A pipe branch structure employing such T-shaped couplings is formed by coupling together plural separate pipes configuring the main pipe at each of the T-shaped couplings. Note that manufacturing error regarding the length of the respective separate pipes, and error in the connection margin (in other words, the insertion margin) of the separate pipes with respect to the T-shaped couplings, adds to the length of the main pipe (in other words, the distance between both axial direction ends of the main pipe). Thus, issues arise in that error regarding the length of the main pipe increases as the number of branches increases, and the length of the main pipe changes depending on the number of branch pipes assembled thereto. Moreover, in the pipe branch structure disclosed in JP-Y No. H05-11435, since the leading ends of the branch pipes are press-fit into the cross holes formed at the main pipe, the position of the branch pipes with respect to the main pipe cannot be adjusted during and after assembly of the branch pipes to the main pipe.

In a pipe branch structure including a main pipe and a branch coupling attached to an outer periphery of the main pipe, an object of the present disclosure is to enable a position of the branch pipe with respect to the main pipe to be adjusted, while a length of the main pipe remains unchanged regardless of the number of branch pipes assembled thereto.

### Solution to Problem

A pipe branch structure of one aspect of the present disclosure includes a main pipe, and plural branch couplings disposed one-to-one at plural branch positions set between both axial direction ends of the main pipe. A cross hole is formed at each of the branch positions of the main pipe. Each branch coupling includes a tubular section attached to an outer periphery of the main pipe, a branch section formed with a passage in communication with an inside of the tubular section and configured to connect to a branch pipe, and a seal member configured to seal between the main pipe and the tubular section. The tubular section is attached to the outer periphery of the main pipe in a state in which a cross hole and the passage in the branch section are in communication with each other.

Note that "a branch section configured to connect to a branch pipe" referred to here includes both cases in which the branch pipe is directly connected to the branch section, and cases in which the branch pipe is indirectly connected to the branch section through another member.

### Advantageous Effects of Invention

As described above, in the pipe branch structure including the main pipe and the branch coupling attached to the outer periphery of the main pipe, the present disclosure enables the position of the branch pipe with respect to the main pipe to be adjusted, while the length of the main pipe remains unchanged regardless of the number of branch pipes assembled thereto.

### BRIEF DESCRIPTION OF DRAWINGS

Fig. 1A is a vertical cross-section illustrating a main pipe and plural branch couplings attached to the main pipe in a pipe branch structure according to an exemplary embodiment of the present disclosure.
Fig. 1B is a vertical cross-section illustrating a state prior to couplings being press-fit to both ends of the main pipe illustrated in Fig. 1A.
Fig. 2 is an enlarged view of a section indicated by an arrow 2X in Fig. 1A.
Fig. 3 is a cross-section along line 3X-3X in Fig. 2.
Fig. 4 is a partial vertical cross-section of the branch coupling illustrated in Fig. 1A.
Fig. 5A is an enlarged view of a section of the main pipe indicated by an arrow 5AX in Fig. 1A.
Fig. 5B is a side view of the main pipe illustrated in Fig. 5B as viewed from the direction of an arrow 5BX.
Fig. 5C is a cross-section along line 5CX-5CX in Fig. 5A.
Fig. 6 is a vertical cross-section of a first modified example of a branch coupling according to the present disclosure.
Fig. 7 is a vertical cross-section of a second modified example of a branch coupling according to the present disclosure.
Fig. 8 is a vertical cross-section of a third modified example of a branch coupling according to the present disclosure.
Fig. 9 is a vertical cross-section of a fourth modified example of a branch coupling according to the present disclosure.
Fig. 10 is a vertical cross-section of a fifth modified example of a branch coupling according to the present disclosure.
Fig. 11 is a vertical cross-section illustrating a state in which the branch coupling illustrated in Fig. 10 has been attached to a main pipe.
Fig. 12 is a cross-section along line 12X-12X in Fig. 11.
Fig. 13 is a lateral cross-section (a cross-section corresponding to Fig. 3) illustrating a state in which the coupling body illustrated in Fig. 3 has been attached to a modified example of a main pipe according to the present disclosure.

### DESCRIPTION OF EMBODIMENTS

Explanation follows regarding a pipe branch structure according to an exemplary embodiment of the present disclosure, with reference to the drawings.

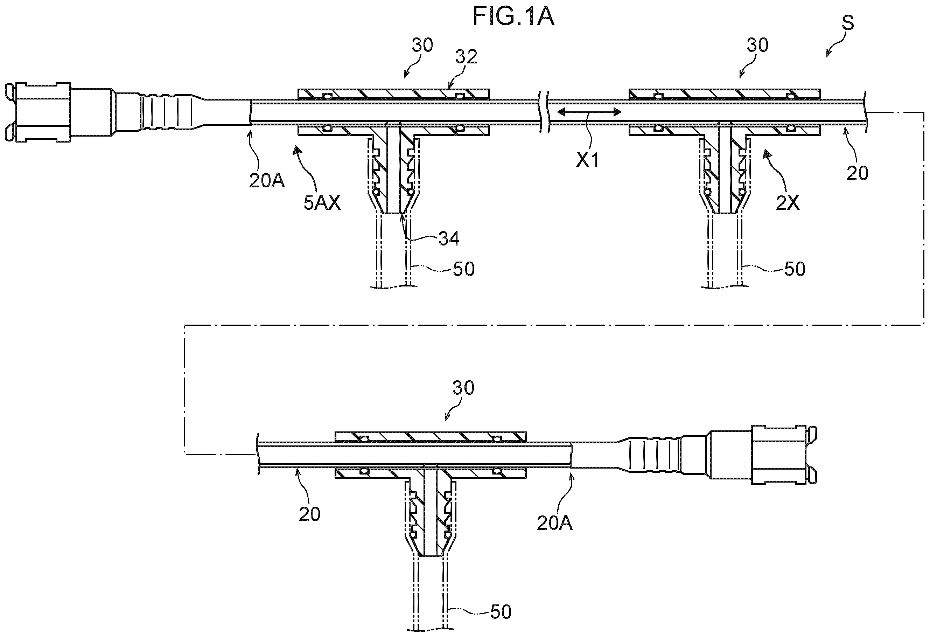

Fig. 1A illustrates a pipe branch structure (hereafter referred to as the "branch structure" as appropriate) S of the present exemplary embodiment. The pipe branch structure S of the present exemplary embodiment is a branch structure applied to a pipe system or the like of a vehicle. Specifically, in various vehicles such as electric vehicles (EVs) and hybrid electric vehicles (HEV) that are installed with a heat exchanger for each battery cell, the pipe branch structure S may be employed as a branch structure of a pipe system to distribute cooling water to the respective heat exchangers. Note that application of the branch structure S of the present disclosure is not limited to thereto.

As illustrated in Fig. 1A, the pipe branch structure S includes a single main pipe 20 and plural branch couplings 30.

### Main Pipe

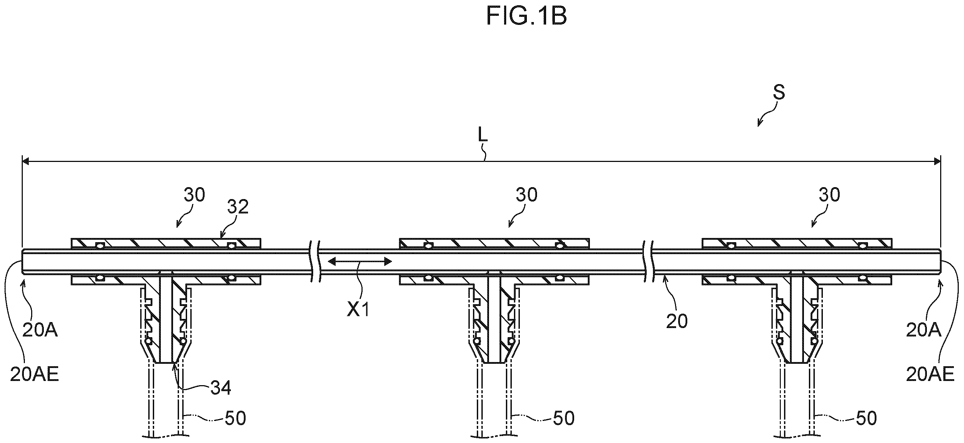

The main pipe 20 is pipe-shaped member configuring part of a non-illustrated pipe system of a vehicle. The main pipe 20 is formed of a resin material and is capable of elastic deformation. Couplings such as quick connectors are press-fit to both ends 20AE of the main pipe 20, and the main pipe 20 is connected to non-illustrated pipes through these couplings. Fig. 1B illustrates a state prior to the couplings being press-fit to both the ends 20AE of the main pipe 20. As illustrated in Fig. 1B, a length L of the main pipe 20 is set to a required length of the main pipe 20 in the pipe system in which the main pipe 20 is employed. Note that the length L of the main pipe 20 refers here to the length along an axial direction of the main pipe 20 (the arrow X1 direction in Fig. 1A and Fig. 1B).

As illustrated in Fig. 1B, plural branch positions for branching from the main pipe 20 are set spaced apart along the axial direction of the main pipe 20 between both the axial direction ends 20AE of the main pipe 20. Note that the branch positions of the main pipe 20 refers here to positions for branching from the main pipe 20 in the pipe system in which the main pipe 20 is employed. The branch couplings 30 are disposed one-to-one at the plural branch positions of the main pipe 20.

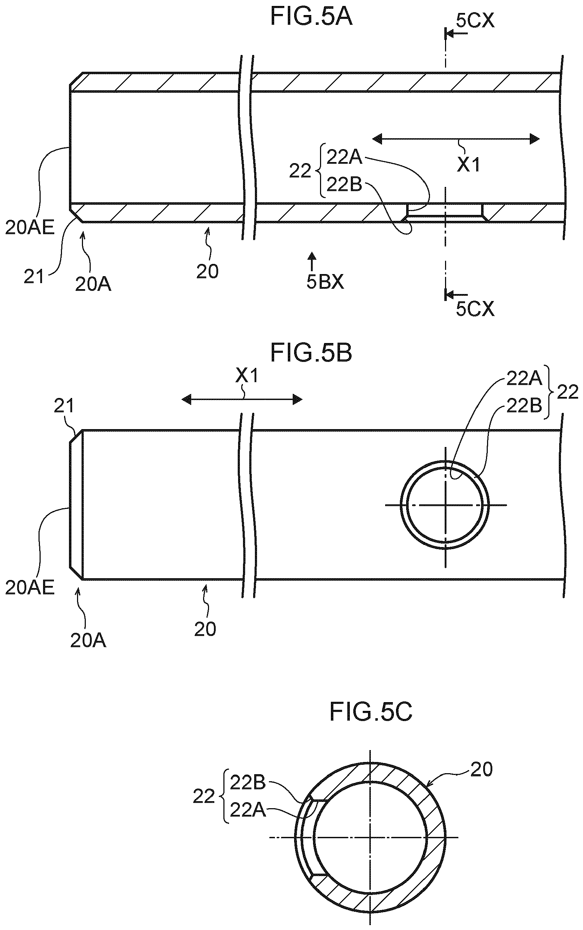

As illustrated in Fig. 5A and Fig. 5B, a decreasing-diameter portion 21 with a decreasing outer diameter on progression toward the corresponding leading end 20AE is formed at both axial direction end portions 20A of the main pipe 20. In other words, a tapered shape is formed at each of the axial direction end portions 20A of the main pipe 20, and this tapered portion configures the decreasing-diameter portion 21.

Cross holes 22 are formed at the branch positions of the main pipe 20. Each of the cross holes 22 is a hole that penetrates from a radial direction inside to an outside of a peripheral wall of the main pipe 20. In the present exemplary embodiment, a single cross hole 22 is formed at each of the branch positions of the main pipe 20.

As illustrated in Fig. 5A and Fig. 5C, each of the cross holes 22 includes an increasing-diameter portion 22B with a diameter that increases on progression toward an outer periphery of the main pipe 20. Specifically, the cross hole 22 includes a uniform-diameter portion 22A with a uniform diameter extending from an inner peripheral face to an outer peripheral face side of the main pipe 20, and the increasing-diameter portion 22B that increases in diameter on progression from the uniform-diameter portion 22A toward the outer peripheral face of the main pipe 20.

### Branch Couplings

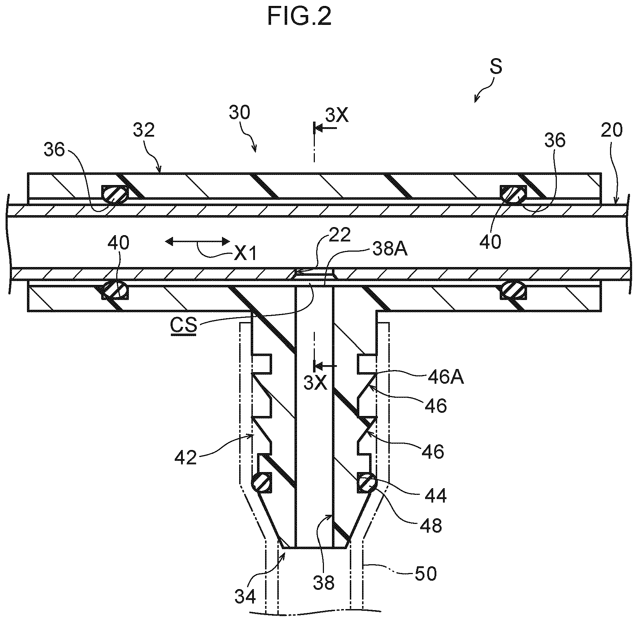

As illustrated in Fig. 2 to Fig. 4, each of the branch couplings 30 includes a tubular section 32, a branch section 34, and seal members 36.

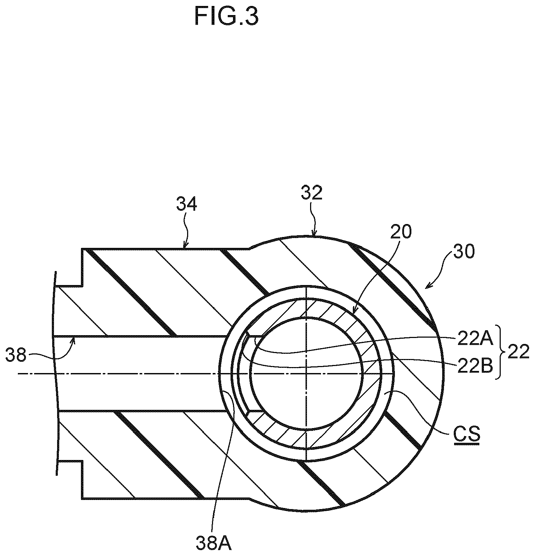

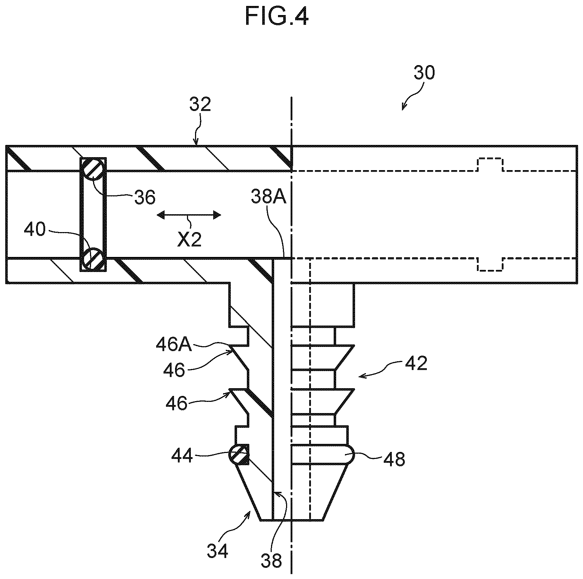

As illustrated in Fig. 3 and Fig. 4, the tubular section 32 has a circular tube shape into which the main pipe 20 is inserted (see Fig. 2 and Fig. 3). In other words, the tubular section 32 is attached to the outer periphery of the main pipe 20 by inserting the main pipe 20 into the tubular section 32. An inner diameter of the tubular section 32 is uniform along its axial direction (the arrow X2 direction in Fig. 4).

As illustrated in Fig. 4, a passage 38 in the branch section 34, described later, opens onto an inner peripheral face of the tubular section 32. Ring-shaped seal grooves 40 are respectively formed at the inner peripheral face of the tubular section 32 on both axial direction sides of the tubular section 32 so as to be on either side of an opening 38A of the passage 38. Each of these seal grooves 40 is a recessed portion formed continuously around a circumferential direction of the tubular section 32 at the inner peripheral face of the tubular section 32.

In the present exemplary embodiment, in a state in which the branch coupling 30 has been attached to the main pipe 20, the axial direction X1 of the main pipe 20 and the axial direction X2 of the tubular section 32 are substantially aligned. Thus, illustration of the axial direction X2 of the tubular section 32 is omitted in drawings in which the branch coupling 30 has been attached to the main pipe 20.

As illustrated in Fig. 4, the branch section 34 is a projecting section with a circular cross-section that projects from an outer periphery of the tubular section 32 in a direction (an orthogonal direction in the present exemplary embodiment) intersecting the axial direction of the tubular section 32. The passage 38 through which a fluid (cooling water in the present exemplary embodiment) passes from a leading end to a base end in a projection direction is formed at the branch section 34. As mentioned previously, the passage 38 opens onto the inner peripheral face of the tubular section 32 so as to communicate with an inside of the tubular section 32 through the opening 38A.

A pipe connecting portion 42 for connecting a branch pipe 50 is provided at a projection direction leading end side of the branch section 34. Specifically, as illustrated in Fig. 2, the branch pipe 50 is attached to an outer periphery of the pipe connecting portion 42. Note that the branch pipe 50 is formed of a resin material and is capable of elastic deformation. The branch pipe 50 is illustrated by double-dotted dashed lines in the drawings.

As illustrated in Fig. 4, the pipe connecting portion 42 includes a seal groove 44 positioned at the leading end side of the branch section 34, and retaining portions 46 positioned further toward the base end side (in other words, on the opposite side to the leading end side of the branch section 34 in the projection direction) of the branch section 34 than the seal groove 44.

The seal groove 44 is a recessed portion formed continuously around a circumferential direction of the branch section 34 at an outer peripheral face of the branch section 34. An O-ring 48 serving as a seal material is housed in the seal groove 44.

Each of the retaining portions 46 is a bulge-shaped portion formed continuously around the circumferential direction of the branch section 34 at the outer peripheral face of the branch section 34, and has a substantially triangular cross-section profile.

Note that when the branch pipe 50 is attached to the outer periphery of the pipe connecting portion 42, an outer peripheral face of the O-ring 48 makes close contact with an inner peripheral face of the branch pipe 50 so as to seal between the branch pipe 50 and the branch section 34. At locations further toward a leading end side than a contact portion of the inner peripheral face of the branch pipe 50 with the O-ring 48, projection ends 46A of the respective retaining portions 46 press the inner peripheral face of the branch pipe 50 toward its radial direction outside, such that the branch pipe 50 is suppressed from moving in a detachment direction with respect to the branch section 34.

In the present exemplary embodiment, a coupling body configured of the tubular section 32 and the branch section 34 is formed of resin. Note that the coupling body may be an integrally molded resin component, or may be an assembled component configured of plural resin components. As an example, an assembled component may be assembled by joining (bonding, welding, or the like) together halves of the coupling body.

As illustrated in Fig. 4, each of the seal members 36 is ring shaped, and is housed in one of the seal grooves 40 formed at the inner peripheral face of the tubular section 32 described previously. Note that in the present exemplary embodiment, a circular ring-shaped O-ring is employed as the seal member 36. Note that when the tubular section 32 is attached to the outer periphery of the main pipe 20, an inner peripheral face of the seal member 36 makes close contact with the outer peripheral face of the main pipe 20 so as to seal between the main pipe 20 and the tubular section 32 as illustrated in Fig. 2.

The tubular section 32 of the branch coupling 30 is attached to the outer periphery of the main pipe 20 in a state in which the corresponding cross hole 22 in the main pipe 20 and the passage 38 in the branch section 34 are in communication with each other. Specifically, as illustrated in Fig. 2, since the main pipe 20 is supported by a pair of the seal members 36 provided to the branch coupling 30, a gap is formed between the outer peripheral face of the main pipe 20 and the inner peripheral face of the tubular section 32. As illustrated in Fig. 3 and Fig. 4, an enclosed space CS is formed between the pair of seal members 36 as a result of this gap. The passage 38 in the branch section 34 and the cross hole 22 in the main pipe 20 are placed in communication with each other through this enclosed space CS.

Next, explanation follows regarding operation and advantageous effects of the branch structure S of the present exemplary embodiment.

In the branch structure S of the present exemplary embodiment, the tubular sections 32 of the branch couplings 30 are attached to the outer periphery of the main pipe 20, and the branch couplings 30 are disposed one-to-one at the plural branch positions of the main pipe 20. Thus, unlike in structures in which the main pipe is branched using plural separate pipes configuring the main pipe and plural T-shaped couplings, manufacturing error regarding the lengths of the separate pipes and other errors such as a connection margin (in other words, an insertion margin) of the separate pipes with respect to the T-shaped couplings do not affect the length of the main pipe 20 in the branch structure S. The length L of the main pipe 20 thereby remains unchanged regardless of the number of branch pipes assembled thereto. This enables the length of the main pipe 20 to be made uniform.

Moreover, in the branch structure S, the tubular section 32 of the branch coupling 30 is attached to the outer periphery of the main pipe 20 in a state in which the corresponding cross hole 22 in the main pipe 20 and the passage 38 in the branch section 34 are placed in communication with each other through the enclosed space CS formed between the main pipe 20 and the tubular section 32. Thus, when the branch pipe 50 is being connected to the pipe connecting portion 42 of the branch section 34 of the branch coupling 30 in the branch structure S, the tubular section 32 of the branch coupling 30 can be moved along the axial direction of the main pipe 20 with respect to the main pipe 20, unlike for example branch structures in which a leading end of the branch pipe is press-fit into a cross hole in the main pipe to connect the main pipe and the branch pipe. This enables the position of the branch pipe 50 connected to the branch section 34 to be adjusted along the axial direction of the main pipe 20. Moreover, the tubular section 32 of the branch coupling 30 can be rotated about the main pipe 20 with respect to the main pipe 20. This enables the position of the branch pipe 50 connected to the branch section 34 to be adjusted about the circumferential direction of the main pipe 20.

Moreover, in the branch structure S, each of the cross holes 22 in the main pipe 20 includes the increasing-diameter portion 22B, and so the angle of an outer edge (namely, an edge on the outer peripheral side of the main pipe 20) of the cross hole 22 is larger (in other words, gentler) than for example branch structures employing a main pipe in which the cross holes have a uniform diameter. This enables damage to the inner peripheries of the seal members 36 caused by the outer edge of the cross hole 22 when the tubular section 32 of the branch coupling 30 is being moved along the axial direction of the main pipe 20 to be suppressed.

Furthermore, in the branch structure S, the decreasing-diameter portions 21 are formed to both the axial direction end portions 20A of the main pipe 20, such that the seal members 36 abut the decreasing-diameter portion 21 of the main pipe 20 when the main pipe 20 is being inserted into the tubular section 32 of the branch coupling 30. Each of the seal members 36 rides up onto the outer peripheral face of the main pipe 20 while its inner diameter is gradually enlarged by the decreasing-diameter portion 21 of the main pipe 20. Since the seal member 36 abuts the decreasing-diameter portion 21 when the main pipe 20 is being inserted into the tubular section 32 of the branch coupling 30 in this manner, damage to the inner peripheral side of the seal member 36 is suppressed.

Although the cross holes 22 are formed in advance (in other words, formed prior to attaching the branch couplings 30) at the branch positions of the main pipe 20 in the branch structure S of the exemplary embodiment described above, the present disclosure is not limited to this configuration. The cross holes 22 may be formed at the main pipe 20 after the branch couplings 30 have been attached at the branch positions of the main pipe 20.

Although the main pipe 20 is formed of a resin material in the branch structure S of the exemplary embodiment described above, the present disclosure is not limited to this configuration. The main pipe 20 may for example be formed of a metal material.

Although the decreasing-diameter portions 21 are respectively formed to both the axial direction end portions 20A of the main pipe 20 in the branch structure S of the exemplary embodiment described above, the present disclosure is not limited to this configuration. For example, configuration may be such that the decreasing-diameter portion 21 is only formed to an end portion 20A on one axial direction side of the main pipe 20. Note that inserting the end portion 20A of the main pipe 20 formed with the decreasing-diameter portion 21 into the tubular sections 32 of the branch couplings 30 enables the advantageous effect of suppressing damage to the seal members 36 to be obtained.

Although a branch coupling 30 is employed in which a single branch section 34 is provided to the tubular section 32 as illustrated in Fig. 4 in the branch structure S of the exemplary embodiment described above, the present disclosure is not limited to this configuration. For example, a branch coupling in which plural branch sections 34 are provided to the tubular section 32 may be employed. These plural branch sections 34 may be formed spaced apart along the axial direction of the tubular section 32, spaced apart around the circumferential direction of the tubular section 32, or spaced apart about both the axial direction of the tubular section 32 and the circumferential direction of the tubular section 32. In cases in which plural branch sections 34 are formed spaced apart along the axial direction of the tubular section 32, the projection directions of branch sections 34 that are adjacent to one another in the axial direction of the tubular section 32 may be made to differ from one another.

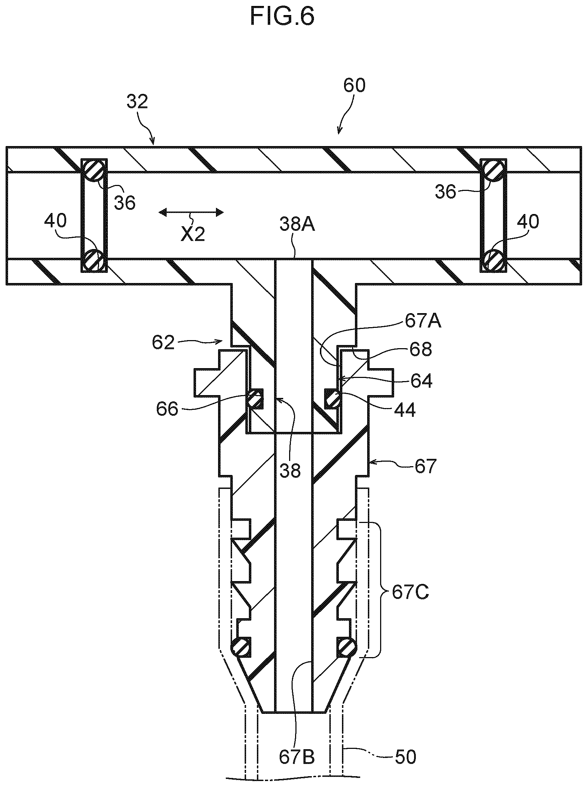

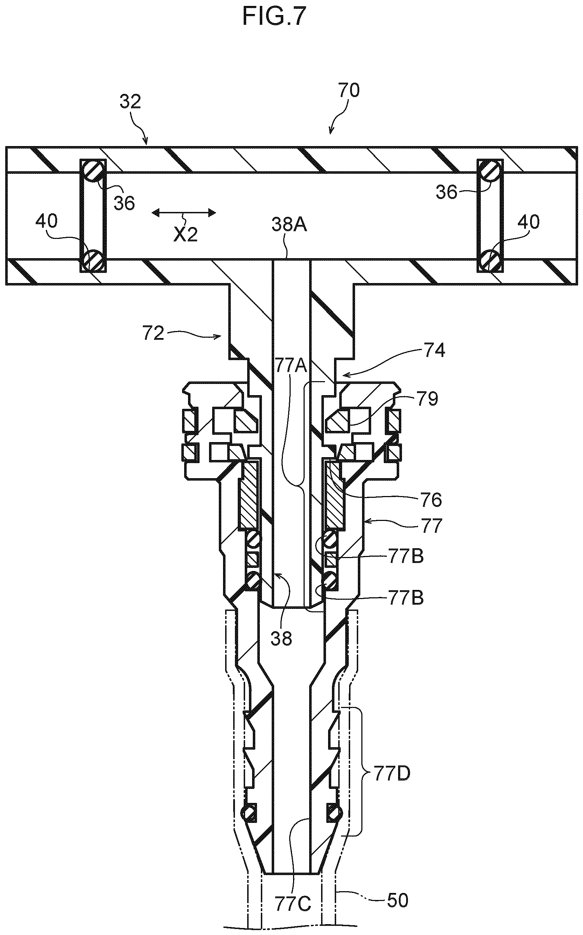

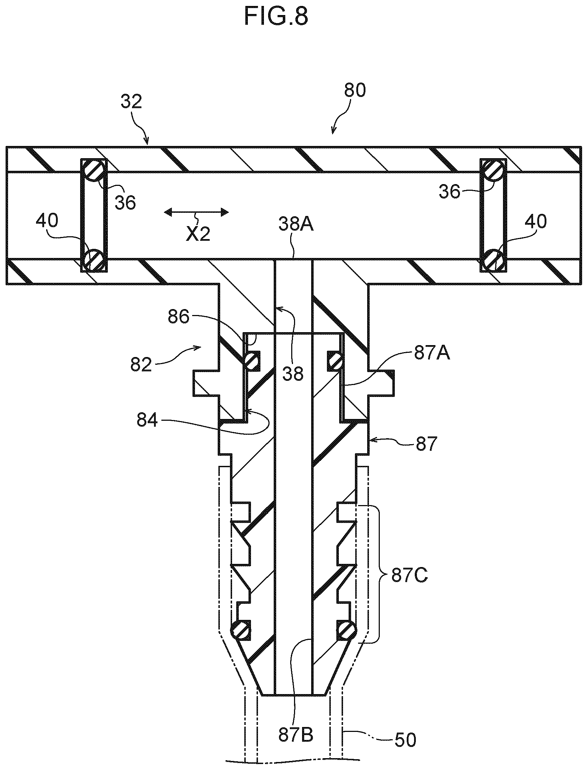

Although the pipe connecting portion 42 is provided to the branch section 34 of the branch coupling 30, and the branch pipe 50 is connected to the branch section 34 through this pipe connecting portion 42 as illustrated in Fig. 4, in the branch structure S of the exemplary embodiment described above, the present disclosure is not limited to this configuration. For example, as in a branch joint 60 of a first modified example illustrated in Fig. 6, a pipe connecting portion 64 may be provided to a branch section 62, and the branch pipe 50 connected to the branch section 62 through a female joint 67 that fits together with the pipe connecting portion 64. Alternatively, as in a branch joint 70 of a second modified example illustrated in Fig. 7, a pipe connecting portion 74 may be provided to a branch section 72, and the branch pipe 50 connected to the branch section 72 through a quick connector 77 that receives the pipe connecting portion 74. Alternatively, as in a branch joint 80 of a third modified example illustrated in Fig. 8, a pipe connecting portion 84 may be provided to a branch section 82, and the branch pipe 50 connected to the branch section 34 through a male joint 87 that fits together with the pipe connecting portion 84. As in these modified examples, a configuration in which a branch pipe is connected to a branch section can be implemented through a coupling such as the female joint 67, the quick connector 77, or the male joint 87.

As illustrated in Fig. 6, the pipe connecting portion 64 of the branch joint 60 includes a seal groove 66 positioned at a projection direction leading end side of the branch section 62, and a step 68 positioned further toward a base end side of the branch section 62 than the seal groove 66 so as to jut out toward the radial direction outside of the branch section 62. An O-ring 48 is housed in the seal groove 66. When the female joint 67 is attached to an outer periphery of the pipe connecting portion 64, the O-ring 48 makes close contact with an inner peripheral face of the female joint 67 so as to seal between the branch section 34 and the female joint 67. Moreover, when the female joint 67 is being attached to the outer periphery of the pipe connecting portion 64, the step 68 functions as a stopper by abutting an end portion of the female joint 67. Note that the female joint 67 includes a coupling portion 67A that fits together with the pipe connecting portion 64, a passage 67B that is in communication with the passage 38 in the branch section 62 in a state attached (externally attached) to the pipe connecting portion 64, and a pipe connecting portion 67C to which the branch pipe 50 is attached (externally attached).

As illustrated in Fig. 7, the pipe connecting portion 74 of the branch joint 70 includes a ring-shaped jutting portion 76 that juts out toward a radial direction outside of the branch section 72. When the quick connector 77 is attached to an outer periphery of the pipe connecting portion 74, the jutting portion 76 engages with a retainer 79. An attached state of the quick connector 77 to the pipe connecting portion 74 is maintained by this engagement. Note that the quick connector 77 includes an insertion portion 77A into which the pipe connecting portion 74 is inserted, the retainer 79 that retains the pipe connecting portion 74 inside the insertion portion 77A by engaging with the jutting portion 76, and O-rings 77B that are disposed in the insertion portion 77A and make close contact with an outer peripheral face of the pipe connecting portion 74 inserted into the insertion portion 77A. The quick connector 77 also includes a passage 77C that is in communication with the passage 38 in the branch section 72 in a state attached (externally attached) to the pipe connecting portion 74, and a pipe connecting portion 77D to which the branch pipe 50 is attached (externally attached).

As illustrated in Fig. 8, the pipe connecting portion 84 of the branch joint 80 is a recessed portion recessed from a projection direction leading end toward a base end side of the branch section 82 and to which an end portion of the male joint 87 is fitted. Since the diameter of the pipe connecting portion 84 is larger than the diameter of the passage 38, a step 86 is formed between the pipe connecting portion 84 and the passage 38. When the male joint 87 is being attached (internally attached) inside the pipe connecting portion 84, the step 86 functions as a stopper by abutting the end portion of the male joint 87. Note that the male joint 87 includes a coupling portion 87A that fits together with the pipe connecting portion 84, a passage 87B that is in communication with the passage 38 in the branch section 82 in a state attached (internally attached) to the pipe connecting portion 84, and a pipe connecting portion 87C to which the branch pipe 50 is attached (externally attached).

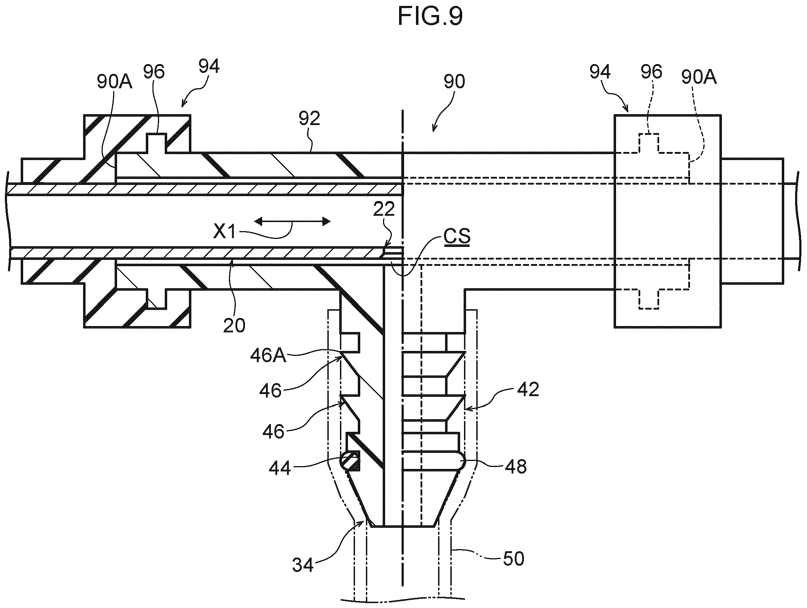

Although the seal grooves 40 are formed at the inner peripheral face of the tubular section 32 of the branch coupling 30 and the seal members 36 are housed in the seal grooves 40 in the branch structure S of the exemplary embodiment described above, the present disclosure is not limited to this configuration. For example, as in a branch joint 90 of a fourth modified example illustrated in Fig. 9, substantially circular tube-shaped seal members 94 may be employed to seal between a tubular section 92 and the main pipe 20. The branch joint 90 illustrated in Fig. 9 includes the circular tube-shaped tubular section 92 with a uniform inner diameter into which the main pipe 20 is inserted, and ring-shaped ribs 96 that are respectively formed to both axial direction end portions 92A of the tubular section 92 and project out from an outer periphery of the tubular section 92. The branch joint 90 also includes the substantially circular tube-shaped seal members 94, each with one portion in close contact with an outer periphery of the corresponding axial direction end portion 92A of the tubular section 92 and a remaining portion attached to the outer periphery of the main pipe 20. Each of the seal members 94 is formed with a ring-shaped recess shaped corresponding to the ring-shaped rib 96 in an inner peripheral face corresponding to the one portion, and the ring-shaped rib 96 is fitted into this recessed portion, thereby suppressing the seal member 94 from detaching from the tubular section 92. Note that a seal band or the like may be attached to an outer periphery of the remaining portion of each of the seal members 94 so as to raise the level of cohesion between the seal member 94 and the main pipe 20.

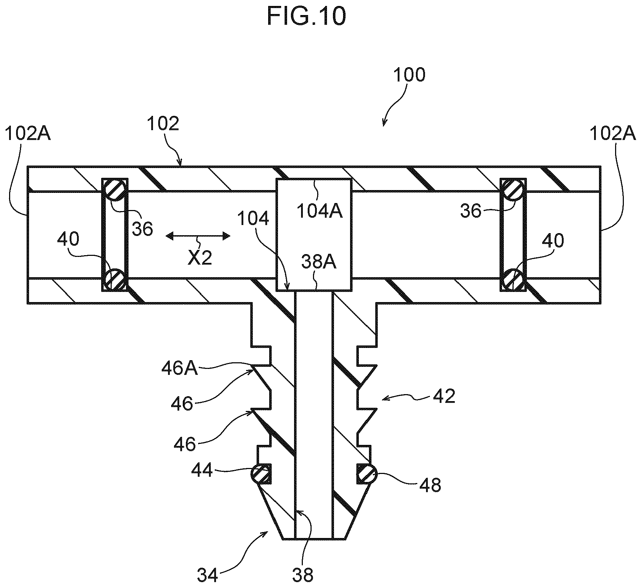

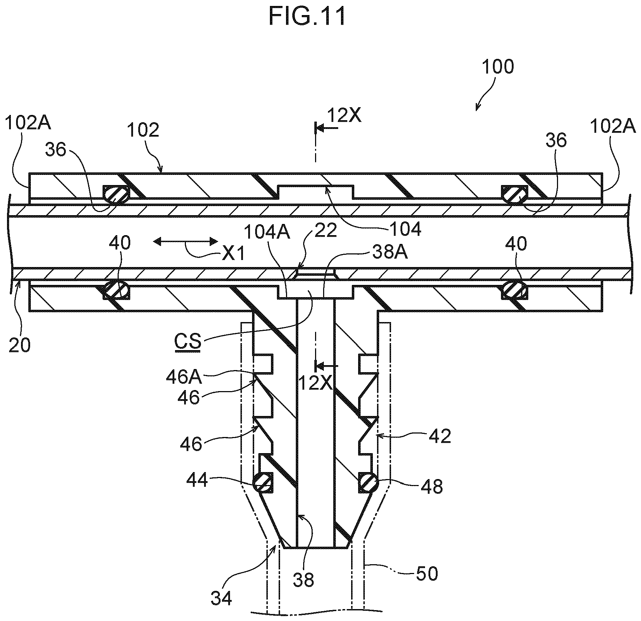

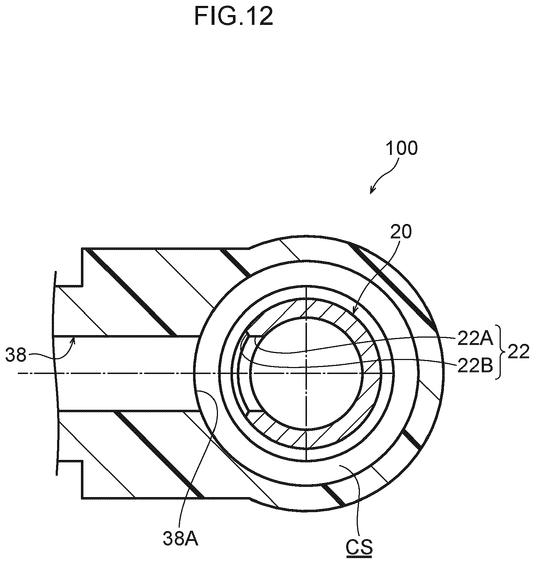

Although the inner diameter of the tubular section 32 is uniform in the branch structure S of the exemplary embodiment described above, the present disclosure is not limited to this configuration. For example, as in a branch joint 100 of a fifth modified example illustrated in Fig. 10 to Fig. 12, an inner diameter of a tubular section 102 may be larger at the opening 38A side of the passage 38 than at both axial direction end portion 102A sides of the tubular section 102. Specifically, a ring-shaped communication groove 104 may be formed extending continuously around the circumferential direction of the tubular section 102 at an inner peripheral face of the tubular section 102, and the opening 38A of the passage 38 formed at a bottom face 104A of the communication groove 104. In such cases, since the inner diameter of the tubular section 102 is larger at the opening 38A side of the passage 38 than at both the axial direction end portion 102A sides of the tubular section 102, a gap between the main pipe 20 and the tubular section 102 is larger at the opening 38A side of the passage 38 than at both the axial direction end portion 102A sides of the tubular section 102. Thus, even if the position of the cross hole 22 in the main pipe 20 is misaligned with respect to the opening 38A of the passage 38 as a result of adjusting the position of the branch pipe 50 with respect to the main pipe 20, fluid can be made to flow smoothly between the main pipe 20 and the branch pipe 50 since the enclosed space CS has increased in size similarly to the gap as illustrated in Fig. 11 and Fig. 12.

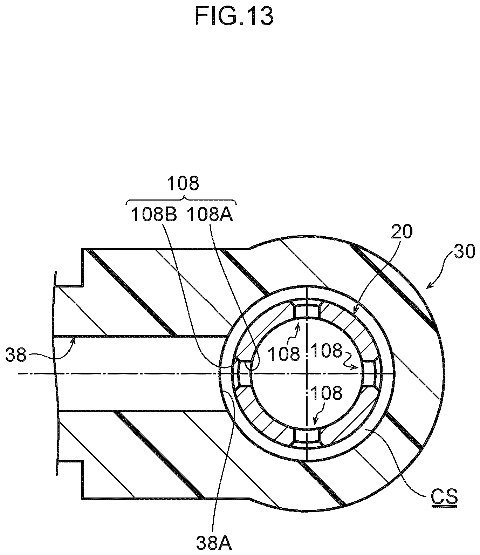

Although a single cross hole 22 is formed at each of the branch positions of the main pipe 20 in the branch structure S of the exemplary embodiment described above, the present disclosure is not limited to this configuration. For example, plural cross holes 22 may be formed at a branch position of the main pipe 20. Specifically, as illustrated in Fig. 13, plural cross holes 108 may be formed spaced apart around the circumferential direction of the main pipe 20 at the branch position of the main pipe 20. Alternatively, plural cross holes 108 may be formed spaced apart along the axial direction of the main pipe 20 at the branch position of the main pipe 20. As another alternative, plural cross holes 108 may be formed spaced apart about both the circumferential direction and the axial direction of the main pipe 20 at the branch position of the main pipe 20. Note that in Fig. 13, the reference numeral 108A refers to a uniform-diameter portion of the cross hole 108, whereas the reference numeral 108B refers to an increasing-diameter portion of the cross hole 108.

Although the seal grooves 40 with the seal members 36 housed therein are provided on both axial direction sides of the opening 38Ain the tubular section 32 in the branch structure S of the exemplary embodiment described above, the present disclosure is not limited to this configuration. For example, plural seal grooves 40 may be provided on either axial direction side of the opening 38A in the tubular section 32, and a seal member 36 housed in each of the plural seal grooves 40.

The main pipe 20 is not necessarily a straight pipe in the exemplary embodiment and respective modified examples described above. For example, the present disclosure may be applied to a main pipe that has been bent. In such cases, the branch couplings 30 and so on may be attached at a straight portion on one side of the bend portion, or at straight portions on both sides of the bend portion. Alternatively, depending on the curvature of the bend portion, the elastic deformation of the main pipe may be utilized such that the branch couplings 30 and so on are attached so as to override the bend portion.

Although exemplary embodiments of the present disclosure have been described using the above exemplary embodiment, this exemplary embodiment is merely an example, and various modifications may be implemented within a range not departing from the spirit of the present disclosure. Moreover, obviously the scope of rights of the present disclosure is not limited to this exemplary embodiment.

The following supplements are disclosed relating to the above exemplary embodiment.

### Supplement 1

A pipe branch structure including:
a main pipe; and
plural branch couplings disposed one-to-one, at plural branch positions set between both axial direction ends of the main pipe,
a cross hole being formed at each of the branch positions of the main pipe,
each branch coupling including a tubular section attached to an outer periphery of the main pipe, a branch section formed with a passage in communication with an inside of the tubular section and configured to connect to a branch pipe, and a seal member configured to seal between the main pipe and the tubular section, the tubular section being attached to the outer periphery of the main pipe in a state in which the cross hole and the passage in the branch section are in communication with each other.

In the pipe branch structure of supplement 1, the tubular section of the branch coupling is attached to the outer periphery of the main pipe, and the branch couplings are disposed one-to-one at the plural branch positions of the main pipe. Thus, in this pipe branch structure, the length of the main pipe remains unchanged regardless of the number of branch pipes assembled thereto, unlike for example structures in which the main pipe is made to branch off using plural separate pipes configuring the main pipe and T-shaped couplings. This enables the length of the main pipe to be made uniform.

Moreover, in this pipe branch structure, the tubular section of the branch coupling is attached to the outer periphery of the main pipe in a state in which the cross hole in the main pipe and the passage in the branch section are in communication with each other through a gap between the main pipe and the tubular section. Note that since the branch pipe is connected to the branch section of the branch coupling in this pipe branch structure, the tubular section of the branch coupling can be moved along an axial direction of the main pipe with respect to the main pipe, unlike for example branch structures in which a leading end of the branch pipe is press-fit into a cross hole in the main pipe to connect the branch pipe to the main pipe. This enables the position of the branch pipe connected to the branch section to be adjusted along the axial direction of the main pipe. Moreover, the tubular section of the branch coupling can be rotated about the main pipe with respect to the main pipe. This enables the position of the branch pipe connected to the branch section to be adjusted about a circumferential direction of the main pipe.

### Supplement 2

The pipe branch structure of supplement 1, wherein plural cross holes are formed spaced apart around a circumferential direction of the main pipe at one of the plural branch positions of the main pipe.

In the pipe branch structure of supplement 2, the plural cross holes are formed spaced apart around the circumferential direction of the main pipe at one of the branch positions of the main pipe. This enables fluid to be made to flow smoothly between the main pipe and the branch pipe, even if the positions of the cross holes in the main pipe are misaligned in the circumferential direction of the main pipe with respect to the passage in the branch section, unlike for example structures in which a single cross hole is formed at a single branch position of the main pipe.

### Supplement 3

The pipe branch structure of supplement 1 or supplement 2, wherein:
the seal member is ring shaped, and is housed in a ring-shaped seal groove formed at an inner peripheral face of the tubular section; and
the cross hole includes an increasing-diameter portion with a diameter that increases on progression toward the outer periphery of the main pipe.

In the pipe branch structure of supplement 3, the cross hole in the main pipe includes the increasing-diameter portion with a diameter that increases on progression toward the outer periphery of the main pipe. This enables damage to inner periphery of the seal member caused by an outer edge of the cross hole (an edge on the outer peripheral side of the main pipe) when the tubular section of the branch coupling is being moved along the axial direction of the main pipe to be suppressed, unlike for example branch structures employing a main pipe with cross holes with a uniform diameter.

### Supplement 4

The pipe branch structure of supplement 3, wherein a decreasing-diameter portion with an outer diameter that decreases on progression toward a leading end is formed at an axial direction end portion of the main pipe.

In the pipe branch structure of supplement 4, the decreasing-diameter portion with an outer diameter that decreases on progression toward its leading end is formed at the axial direction end portion of the main pipe. Thus, an inner peripheral side of the seal member abuts the decreasing-diameter portion of the main pipe when the main pipe is being inserted into the tubular section of the branch coupling, such that damage to the inner peripheral side of the seal member is suppressed.

### Supplement 5

The pipe branch structure of any one of supplement 1 to supplement 4, wherein an inner diameter of the tubular section is larger at an opening side of the passage formed in the tubular section than at both axial direction end portion sides of the tubular section.

In the pipe branch structure of supplement 5, the inner diameter of the tubular section is larger at the opening side of the passage formed in the tubular section than at both the axial direction end portion sides of the tubular section. Thus, a gap between the main pipe and the tubular section is larger at the opening side of the passage formed in the tubular section than at both the axial direction end portion sides of the tubular section. This enables fluid to be made to flow smoothly between the main pipe and the branch pipe in this pipe branch structure, even if the position of the cross hole in the main pipe is misaligned with respect to the passage in the branch section as a result of adjusting the position of the branch pipe with respect to the main pipe.

### Supplement 6

The pipe branch structure of supplement 5, wherein a ring-shaped communication groove is formed at an inner peripheral face of the tubular section, and an opening of the passage is formed at a bottom face of the communication groove.

In the pipe branch structure of supplement 6, fluid can be made to flow smoothly between the main pipe and the branch pipe using a simple structure in which the communication groove is formed at the inner peripheral face of the tubular section, and the opening of the passage in the branch section is formed at the bottom face of the communication groove.

The entire content of the disclosure of Japanese Patent Application No. 2019-147972 filed on August 9, 2019 is incorporated by reference in the present specification.

All cited documents, patent applications, and technical standards mentioned in the present specification are incorporated by reference in the present specification to the same extent as if each individual cited document, patent application, or technical standard was specifically and individually indicated to be incorporated by reference.

## Claims

1. A pipe branch structure comprising:
a main pipe; and
a plurality of branch couplings disposed one-to-one, at a plurality of branch positions set between both axial direction ends of the main pipe,
a cross hole being formed at each of the branch positions of the main pipe,
each branch coupling including a tubular section attached to an outer periphery of the main pipe, a branch section formed with a passage in communication with an inside of the tubular section and configured to connect to a branch pipe, and a seal member configured to seal between the main pipe and the tubular section, the tubular section being attached to the outer periphery of the main pipe in a state in which the cross hole and the passage in the branch section are in communication with each other.

2. The pipe branch structure of claim 1, wherein a plurality of cross holes are formed spaced apart around a circumferential direction of the main pipe at one of the plurality of branch positions of the main pipe.

3. The pipe branch structure of claim 1 or claim 2, wherein:
the seal member is ring shaped, and is housed in a ring-shaped seal groove formed at an inner peripheral face of the tubular section; and
the cross hole includes an increasing-diameter portion with a diameter that increases on progression toward the outer periphery of the main pipe.

4. The pipe branch structure of claim 3, wherein a decreasing-diameter portion with an outer diameter that decreases on progression toward a leading end is formed at an axial direction end portion of the main pipe.

5. The pipe branch structure of any one of claim 1 to claim 4, wherein an inner diameter of the tubular section is larger at an opening side of the passage formed in the tubular section than at both axial direction end portion sides of the tubular section.

6. The pipe branch structure of claim 5, wherein a ring-shaped communication groove is formed at an inner peripheral face of the tubular section, and an opening of the passage is formed at a bottom face of the communication groove.
